Europäisches Patentamt

European Patent Office

Office européen des brevets

(11) Veröffentlichungsnummer: **0 079 614**

**A1**

(12) **EUROPÄISCHE PATENTANMELDUNG**

(21) Anmeldenummer: **82110588.9**

(22) Anmeldetag: **16.11.82**

(51) Int. Cl.³: **B 62 L 1/06**
**B 62 L 1/12**

(30) Priorität: **17.11.81 DE 8133628 U**

(43) Veröffentlichungstag der Anmeldung:
**25.05.83 Patentblatt 83/21**

(84) Benannte Vertragsstaaten:
**AT BE CH FR IT LI NL**

(71) Anmelder: Altenburger GmbH & Co. KG
Postfach 1148
D-7893 Jestetten - 1(DE)

(72) Erfinder: Miller, Helmut
Im Dankholz 4
D-7893 Jestetten 1(DE)

(74) Vertreter: Eder, Eugen, Dipl.-Ing. et al,
Patentanwälte Dipl.-Ing. E. Eder Dipl.-Ing. K. Schieschke
Elisabethstrasse 34
D-8000 München 40(DE)

(54) Befestigungsvorrichtung für eine Felgenbremse am Fahrradrahmen.

(57) Die Befestigungsvorrichtung für eine Felgenbremse (1) am Fahrradrahmen umfaßt einen Zentralgewindebolzen (4), der durch ein Loch (19) im Fahrradrahmen verläuft. Mittels einer auf diesem Zentralgewindebolzen aufschraubbaren Mutter (20) ist die Felgenbremse an der Fahrradgabel (17) festspannbar. An der Felgenbremse ist ein Verdrehsicherungsteil (16) ausgebildet. An der Fahrradgabel ist eine Aufnahme (22) für diesen Verdrehsicherungsteil ausgebildet, oder umgekehrt, derart, daß die Bremsbacken (9, 10) bei montierter Felgenbremse gleiche Entfernung zur Felge besitzen.

Fig.1

Croydon Printing Company Ltd.

## Befestigungsvorrichtung für eine Felgenbremse am Fahrradrahmen

Die Erfindung betrifft eine Befestigungsvorrichtung für eine Felgenbremse am Fahrradrahmen mit einem Zentralgewindebolzen, der durch ein Loch im Fahrradrahmen verläuft und mittels einer Mutter festspannbar ist.

Bei derartigen, bekannten Fahrradfelgenbremsen tritt nach ihrer Montage am Fahrrad die Gefahr auf, daß infolge unvermeidlicher, nicht synchron wirkender Bremskräfte oder seitlicher Stöße die Felgenbremse aus ihrer Mittellage bewegt wird. Die Bremsbacken besitzen dadurch zur Felge unterschiedliche Abstände und bei einem folgenden Bremsvorgang wirken die Bremsbacken nicht gleichzeitig. Der Andruck beider Bremsbeläge an die Felge ist unterschiedlich groß und es entsteht eine unerwünschte einseitige Bremswirkung.

Der Erfindung liegt die Aufgabe zugrunde, eine Befestigungsvorrichtung zu schaffen, die auf einfachste Weise eine Fixierung der zentral befestigten Felgenbremse in ihrer Mittelage zur Felge erzwingt und im Betrieb beibehält, ohne daß wesentliche Zusatzkosten für das Zentrieren oder andere Montagearbeiten entstehen. Zugleich soll diese Befestigungsvorrichtung bei allen vorhandenen Fahrrad- und Felgenbremsentypen anwendbar bzw. anpaßbar sein.

Die Erfindung löst diese Aufgabe mit den Mitteln des Patentanspruches 1.

Durch die Erfindung wird erreicht, daß bei der Montage sich zwangsläufig eine Zentrierung, d.h. Einnahme der Mittellage der Felgenbremse einstellt. Die als Verdrehsicherung wirkenden Mittel, nämlich Bolzen und Aufnahmeloch an der Felgenbremse bzw. am Fahrradrahmen bedingen keine wesentlichen zusätzlichen Kosten und vor allem auch keinen zusätzlichen Arbeitsaufwand. Nach der Montage ist die Mittellage der Felgenbremse gewährleistet. Hierdurch ist eine gute und zuverlässige Bremswirkung gegeben.

Weitere Ausgestaltungen der Erfindung ergeben sich aus den Unteransprüchen.

Die Erfindung wird nachfolgend anhand von in der Zeichnung dargestellten Ausführungsbeispielen näher erläutert. In der Zeichnung zeigen:

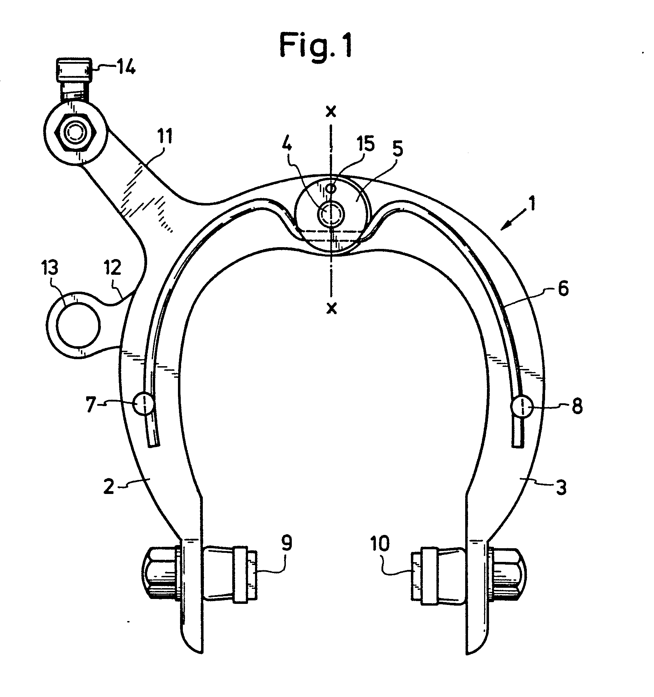

Fig. 1    eine Rückansicht einer Felgenbremse;

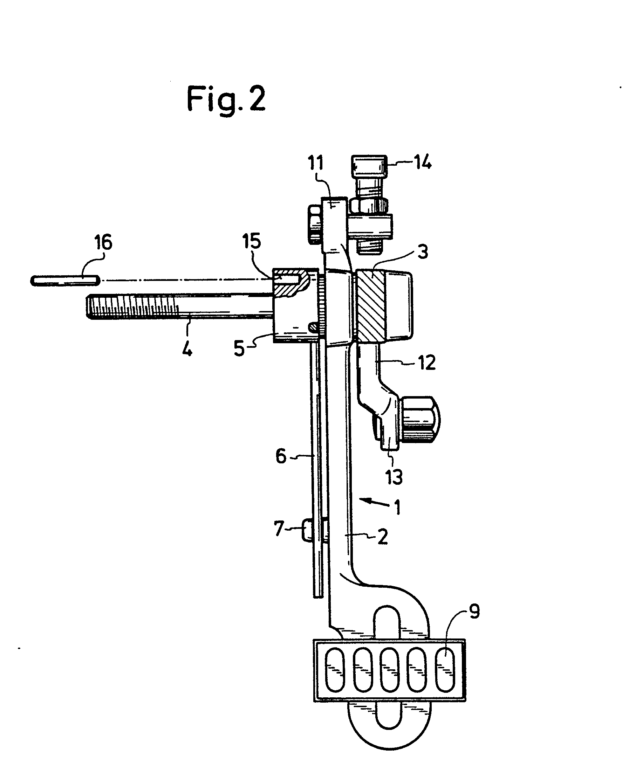

Fig. 2    eine Seitenansicht von Fig. 1;
Fig. 3    eine Teilvorderansicht der Fahrradgabel
          vor der Montage der Felgenbremse;
Fig. 4    eine Seitenansicht, teilweise im Schnitt;
Fig. 5a bis 7a
          Seitenansichten des Zentralbefestigungsbolzens der Felgenbremse, teilweise im
          Schnitt, nach verschiedenen Ausführungsformen, und
Fig. 5b bis 7b
          Stirnansichten des Zentral-Befestigungsbolzens.

Die Felgenbremse 1 besitzt, wie üblich, zwei Bremsbügel 2, 3. Diese sind beweglich an einem Zentralbolzen 4 gelagert, der im Scheitel des von den Bremsenbügeln 2, 3 gebildeten Bogens sitzt. Eine Bügelfeder 6 ist am Bund 5 und an Fortsätzen 7, 8 der Bremsbügel 2, 3 befestigt bzw. abgestützt. Die Bremsbügelenden tragen höheneinstellbar die mit der Felge des Fahrrades greifenden Bremsbacken 9, 10. An Armen 11, 12 der Bremsbügel 2, 3 sind Befestigungen 13 für das Drahtseil eines Bautenzuges bzw. 14 für den Mantel desselben zur Betätigung der Felgenbremse 1 vorgesehen.

- 3 -

Der Bund 5 des Zentralbolzens 4 besitzt an der von den Bremsbügeln 2, 3 abgekehrten Seite ein Loch 15, in das ein glatter, zylindrischer Bolzen 16 zu seiner Befestigung einpreßbar ist.

Vorzugsweise ist das Loch 15 überhalb der Achse des Zentralbolzens 4 in der Symmetriebene X-X gelegen angeordnet.

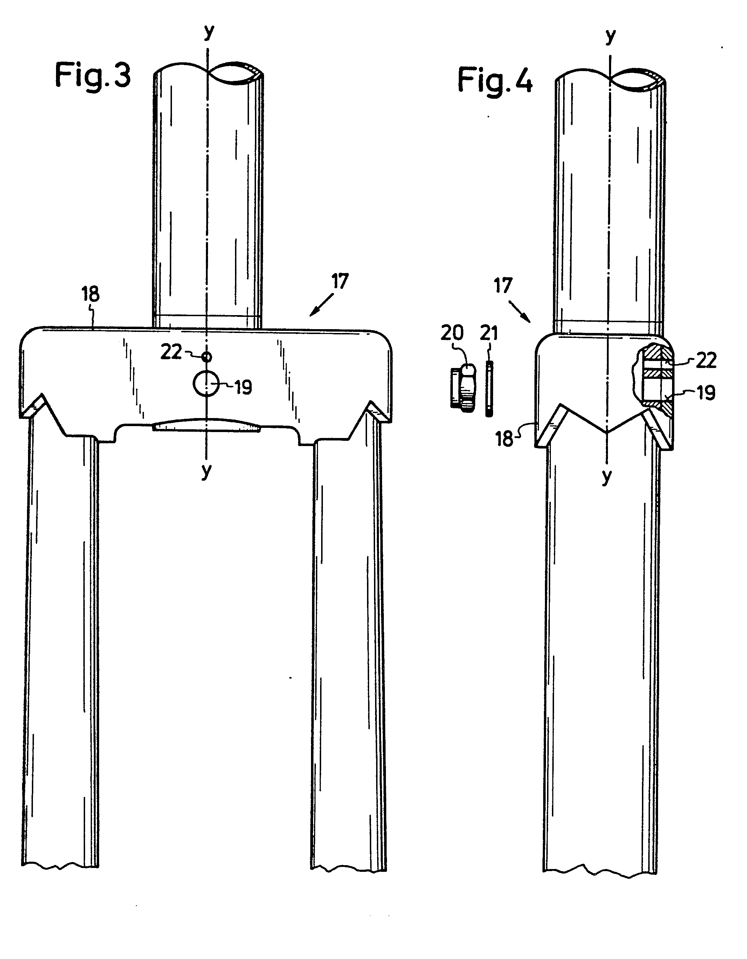

Die in Fig. 3 und 4 dargestellte Fahrradgabel 17 besitzt im Jochstück 18 zentrisch ein Loch 19 zum Durchtritt des Zentralbolzens 4. An der von der Felgenbremse abgekehrten Seite dient eine Schraubenmutter 20 mit Beilagscheibe 21 zum Festspannen der Felgenbremse.

Auf der der Felgenbremse zugekehrten Seite besitzt das Jochstück 18 überhalb der Achse des Loches 19, in der Symmetriemittelebene Y-Y der Fahrradgabel 17 gelegen ein Loch 22, in das bei montierter Bremse das zugekehrte Ende des Bolzens 16 eingreift. Durch den in das Loch 22 eingreifenden Bolzen 16 an der Felgenbremse 1 wird diese zentriert, derart, daß die Bremsbacken 9, 10 nach Montage der Felgenbremse gleichen Abstand von der Fahrradfelge besitzen.

Wie aus Fig. 4 deutlich ersichtlich, erstreckt sich das Loch 22 für den Bolzen 16 lediglich durch eine der Seitenwände des Jochstückes 18. Das Loch 22 im Jochstück 18 wird vom Hersteller der Fahrradgabel 17 vorab bei der Herstellung mit angebracht oder aber, das Loch 22 wird bei der Montage der Felgenbremse gebohrt. Somit ist es auch möglich, diese Felgenbremse an bereits vorhandenen Fahrrädern nachträglich anzubringen.

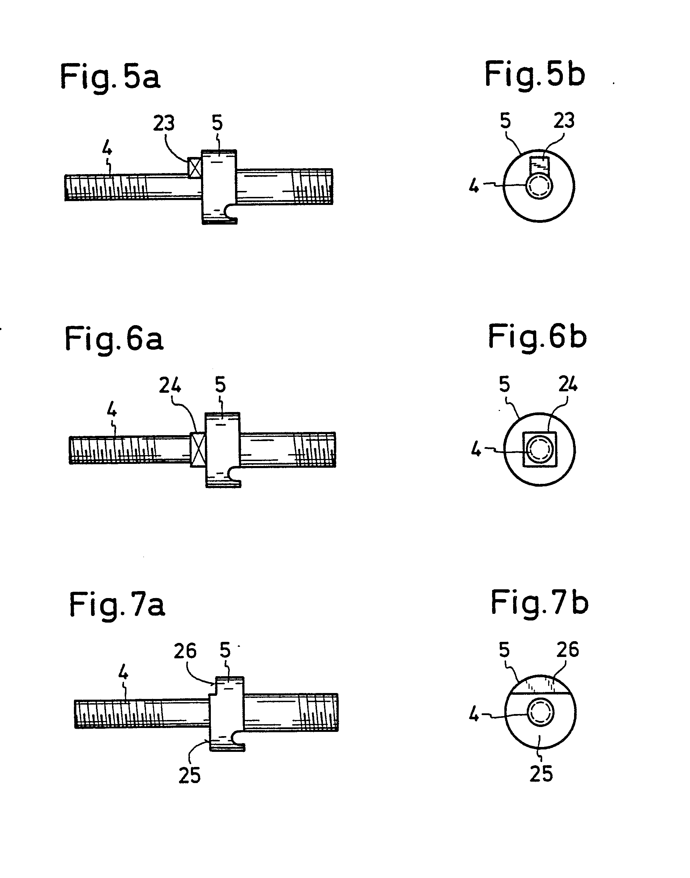

Die Fig. 5a und 5b zeigen eine geänderte Ausführungsform. Hierbei besitzt der Bund 5 des Zentralbolzens 4 statt eines Bolzens 16 einen rechteckförmigen Fortsatz 23 und die zugekehrte Seite des Jochstückes 18 weist eine passende Eindrückung auf.

Bei der geänderten Ausführungsform nach den Fig. 6a und 6b ist am Bund 5 des Zentralbolzens 4 ein kurzes, rechteckiges Bundteil 24 ausgebildet, das in eine passende Eindrückung am Jochstück 18 eingreift.

Bei der weiteren Ausführungsform nach den Fig. 7a und 7b besitzt der Bund 5 des Zentralbolzens 4 eine vorspringende Segmentfläche 25 und eine zurückgesetzte Segmentfläche 26. Die zugehörige Seite am Jochstück 18 besitzt hierzu passende Eindrückungen.

Patentansprüche

1. Befestigungsvorrichtung für eine Felgenbremse am Fahrradrahmen, mit einem Zentralgewindebolzen, der durch ein Loch im Fahrradrahmen verläuft und mittels einer Mutter festspannbar ist, dadurch gekennzeichnet, daß an der Felgenbremse (1) ein Verdrehsicherungsteil (16) ausgebildet und am Fahrradrahmen (17) eine Aufnahme (22) für diesen Verdrehsicherungsteil ausgebildet ist, oder umgekehrt, derart, daß die Bremsbacken (9, 10) bei montierter Felgenbremse gleiche Entfernung zur Felge besitzen.

2. Befestigungsvorrichtung nach Anspruch 1, dadurch gekennzeichnet, daß der Verdrehsicherungsteil an der Felgenbremse (1) ein Bolzen (16) ist und daß die Aufnahme am Fahrradrahmen (17) ein Loch (22) ist, in das der Bolzen passend eingreift.

3. Befestigungsvorrichtung nach Anspruch 1, dadurch gekennzeichnet, daß sich an der Felgenbremse (1) und am Fahrradrahmen (17) jeweils eine Aufnahme (22, 15) befindet und ein Zentrierbolzen (16) in diese Aufnahmen eingesetzt ist.

4. Befestigungsvorrichtung nach Anspruch 1, dadurch gekennzeichnet, daß sich am Fahrradrahmen (17) und an der Felgenbremse (1) statt Bolzen und Aufnahme aufeinander abgestimmte, ineinandergreifende Ein- und Ausprägungen (23, 24, 25, 26) befinden.

## Fig.1

# Fig. 2

0079614

Fig.3

18

17

22

19

y

y

Fig.4

17

20  21

22

19

18

y

y

## Fig. 5a

## Fig. 5b

## Fig. 6a

## Fig. 6b

## Fig. 7a

## Fig. 7b

**Europäisches Patentamt**

**EUROPÄISCHER RECHERCHENBERICHT**

**0079614**

Nummer der Anmeldung

EP 82 11 0588

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | B 62 L 1/06 |
| X | DE-A-2 929 984 (YOSHIGAI KIKAI KINZOKU K.K.) * Seite 11, Zeilen 12-28; Figuren 5,6(1) und 6(2) * | 1,4 | B 62 L 1/12 |
| | --- | | |
| X | FR-A- 932 172 (MOYSE) * Seite 2, Zeilen 25-52; Figur 2 * | 1,4 | |
| | --- | | |
| P,X | FR-A-2 505 430 (GUILLET) * Insgesamt; Figuren 1-3 * | 1,2,4 | |
| | --- | | |
| A | FR-E- 29 549 (DAUNAY) | 1,4 | |
| | --- | | |
| A | DE-A-2 556 568 (WEINMANN) | 1 | RECHERCHIERTE SACHGEBIETE (Int. Cl. 3) |
| | --- | | |
| A | FR-A-2 364 808 (WEINMANN) | 1 | |
| | ----- | | B 62 L 1/00 |

Der vorliegende Recherchenbericht wurde für alle Patentansprüche erstellt.

| Recherchenort DEN HAAG | Abschlußdatum der Recherche 21-02-1983 | Prüfer BRAEMS C.G.I. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82